# EUROPEAN PATENT APPLICATION

(11) **EP 2 594 787 A1**
(43) Date of publication of application: **22.05.2013**
(21) Application number: 11382351.2
(22) Date of filing: 17.11.2011
(51) Int. Cl.: F03D 9/00, F03D 7/02

(54) **Wind turbine**

(71) Applicant: Alstom Wind, S.L.U., 08005 Barcelona (ES)
(72) Inventor: Palomares Rentero, Pedro, 08005 Barcelona (ES)
(74) Representative: de Rooij, Mathieu Julien

(57) **Abstract**

Wind turbine comprising a main generator; a tower with a frame; a hub carrying one or more blades and being rotatably mounted on the frame; a plurality of power-producing windings mounted to the hub and a plurality of magnetic field windings mounted to the frame, in such a way that said power-producing windings and said magnetic field windings make up at least one auxiliary asynchronous generator; a power source; and a power electronic converter for each auxiliary asynchronous generator. Each power electronic converter being electrically connected with the power source and with the magnetic field windings of its related auxiliary asynchronous generator, such that each power electronic converter can control operation of its related magnetic field windings.

## Description

The present invention relates to a wind turbine comprising at least one auxiliary asynchronous generator.

### BACKGROUND ART

Modern wind turbines are commonly used to supply electricity into the electrical grid. Wind turbines of this kind generally comprise a rotor with a rotor hub and a plurality of blades. The rotor is set into rotation under the influence of the wind on the blades. Said rotation generates a torque that is normally transmitted, either directly or through the use of a gearbox, to a main generator through a rotor shaft. And the transmitted torque causes the main generator to produce electricity which is to be supplied into the electrical grid.

Wind turbines may comprise auxiliary systems that may receive power from the main generator when in operation. For example, an important auxiliary system generally provided on wind turbines is a pitch system. Pitch systems are employed for adapting the position of the blades to varying wind conditions by rotating each blade along its longitudinal axis. Other auxiliary systems generally provided in wind turbines include e.g. the yaw system, lighting, air conditioning systems and lubrication systems.

Some known wind turbines comprise an auxiliary generator for supplying power to some of these auxiliary systems, such as e.g. the pitch systems. It is known for said auxiliary generators to be adapted to provide power to auxiliary systems in case of emergency situations, such as e.g. when power supply from the main generator or from a main power line has been interrupted due to a failure in the wind turbine.

For example, the European patent application EP1865198A2 discloses an emergency pitch drive power supply for a wind turbine, comprising an auxiliary generator for producing electric power, said auxiliary generator being connected to at least one pitch drive comprising at least one pitch drive motor typically accommodated inside a hub. Said auxiliary generator comprises permanent magnets and windings arranged in such a way that, when the hub rotates, the windings also rotate with respect to the fixed permanent magnets, i.e. the magnetic fields generated by these magnets. This rotation of the windings with respect to the magnetic fields of the magnets causes induction of currents in the windings. One can thus see that elements dedicated to regulating power from the windings, such as e.g. power converters for controlling operation of the pitch drive motor, have to be arranged in the hub. Therefore, a disadvantage of this configuration is that said control elements may be subjected to vibrations and centrifugal efforts which may increase the risk of failure of the system.

In some embodiments of EP1865198A2, the permanent magnets are fixed to a main frame of the turbine inside the nacelle, and the windings are mounted to a low-speed rotor shaft for driving a main generator. The windings are connected to the pitch drive via a supply line (comprising e.g. cables) to supply said pitch drive with sufficient electric power. The low-speed shaft is formed as a hollow shaft and the supply line is accommodated inside the hollow shaft. A disadvantage of these embodiments may be that the supply line may be damaged due to the rotation movement of the hub and the shaft, so the risk of failure in the supply of power may be significant.

### SUMMARY OF THE INVENTION

There thus still exists a need for wind turbines that resolve at least some of the above mentioned problems. It is an object of the present invention to fulfil such a need.

Said object is achieved with a wind turbine according to claim 1.

In a first aspect, the present invention provides a wind turbine comprising a main generator, a tower with a frame, and a hub carrying one or more blades and being rotatably mounted on the frame. The wind turbine according to this aspect furthermore comprises a plurality of power-producing windings mounted to the hub and a plurality of magnetic field windings mounted to the frame, in such a way that said power-producing windings and said magnetic field windings make up at least one auxiliary asynchronous generator. The wind turbine according to this aspect also has a power source; and a power electronic converter for each auxiliary asynchronous generator. In this wind turbine, each power electronic converter is electrically connected with the power source and with the magnetic field windings of its related auxiliary asynchronous generator, such that each power electronic converter can control operation of its related magnetic field windings.

Such a configuration allows adjusting power from the power source by each power electronic converter. By suitably controlling the converter and taking the speed of rotation of the hub into account, the operation of an auxiliary system can also be controlled.

Consequently, as the magnetic field windings are mounted to the frame and the power-producing windings are mounted to the hub, operation of an auxiliary system arranged in/at the hub or a location jointly rotatable with the hub (e.g. a pitch system, or cameras or lights in the blades) can be controlled from a location not jointly rotatable with the hub (e.g. from a nacelle or the frame itself). Therefore, the proposed configuration has the advantage that elements dedicated to control the operation of the auxiliary systems are arranged in substantially fixed parts of the wind turbine, such as e.g. the nacelle or the tower.

The proposed configuration also permits supplying power generated by the one or more auxiliary asynchronous generators to auxiliary power consuming systems arranged in the hub (e.g. pitch systems) without requiring means for transmitting said power through e.g. the rotor shaft, since both the power-producing windings and the pitch systems are arranged in the hub. In other words, the power is consumed where it is produced.

Herein, the term "tower with a frame" refers to a particular combination of a tower and a frame, in which the tower and the frame may be the same physical element, or the frame may be fixedly mounted on the tower, or the frame may be rotatably mounted on the tower, etc. For example, in the context of the present invention, the frame may comprise a front frame and a rear frame, wherein the hub may be rotatably mounted on the front frame, and the rear frame may be rotatably mounted on the tower.

The term "magnetic field windings" is used to indicate those elements of a generator that have the role of creating a magnetic field (magnetic flux) for other elements of the generator to interact with. These "magnetic field windings" can comprise e.g. electromagnets formed by a conducting coil. The electromagnets may also be referred to as exciting windings. The term "power-producing windings" is used to indicate the other elements of the generator, in which a voltage is generated when interacting with the magnetic field generated by the "magnetic field windings".

In some embodiments, the frame extends forwardly away with respect to the tower, and the hub is rotatably mounted on the frame in such a way that the frame is provided at least partially internally of the hub. These features permit having a more constant air gap between the power-producing windings and the magnetic field windings. The hub and the frame may be joined through a plurality of bearings, in such a way that the hub and frame behave substantially as a single body under cyclical bending loads due to e.g. loads on the blades and the weight of the hub and blades.

Additional objects, advantages and features of embodiments of the invention will become apparent to those skilled in the art upon examination of the description, or may be learned by practice of the invention.

### BRIEF DESCRIPTION OF THE DRAWINGS

Particular embodiments of the present invention will be described in the following by way of non-limiting examples, with reference to the appended drawings, in which:
Figure 1 is a schematic representation of a wind turbine and a region of said wind turbine comprising an auxiliary generator according to an embodiment of the invention;
Figure 2 is a schematic representation of a region of the wind turbine shown in

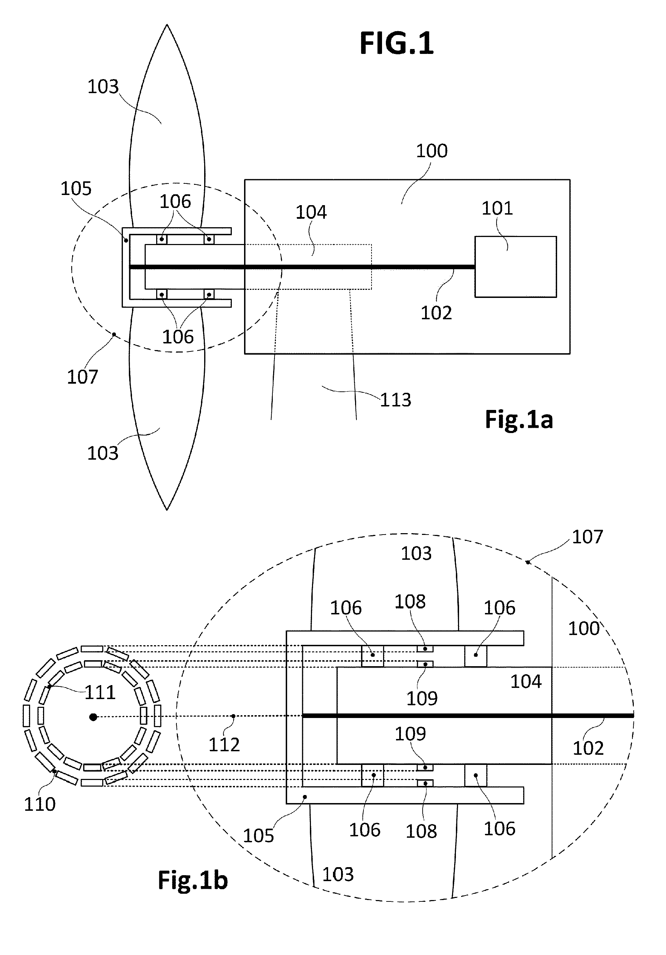

Figure 1, said region comprising an auxiliary generator according to other embodiment of the invention;

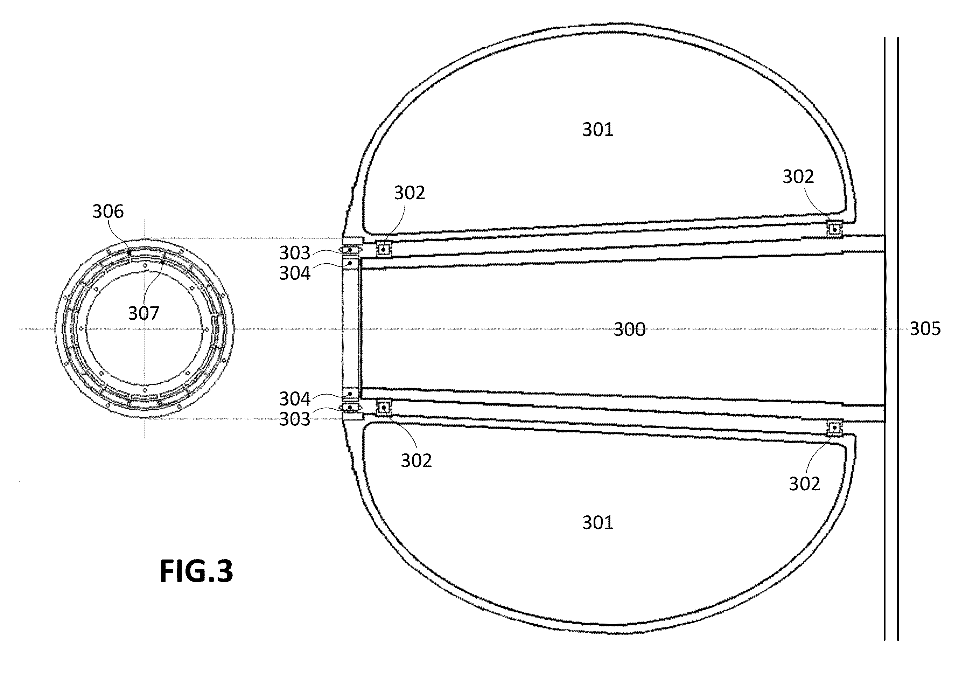

Figure 3 is a schematic representation of a region of a wind turbine, said region comprising an auxiliary generator according to a still other embodiment of the invention;

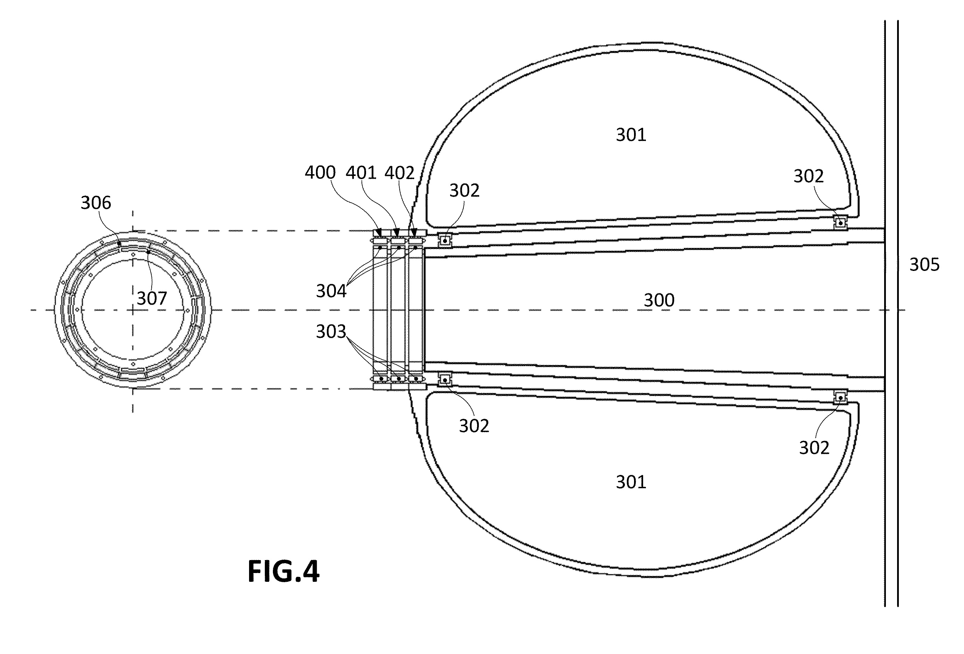

Figure 4 is a schematic representation of a region of a wind turbine, said region comprising a plurality of auxiliary generators according to a further embodiment of the invention; and

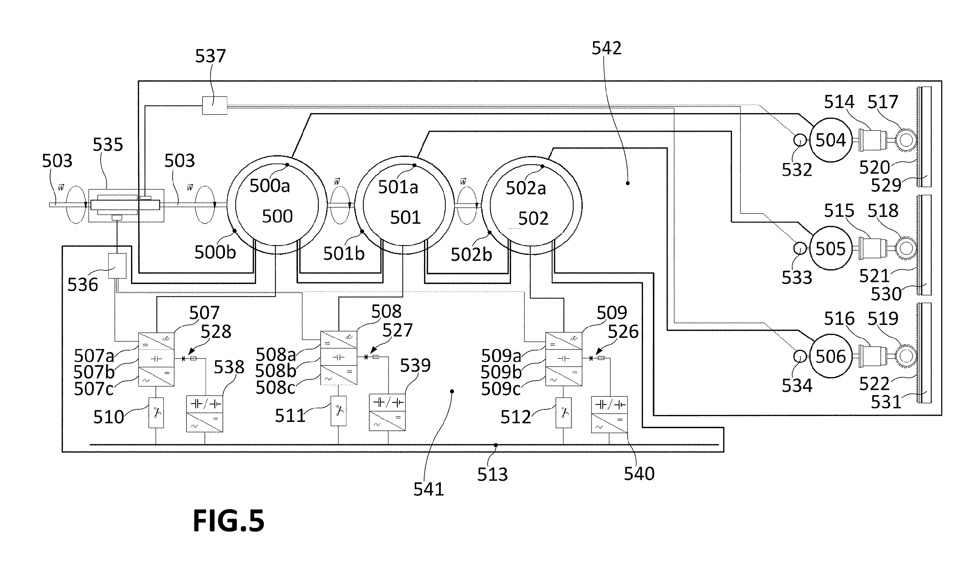

Figure 5 is a schematic representation of a region of a wind turbine, said region comprising a plurality of auxiliary generators and a plurality of pitch systems according to embodiments of the invention.

### DETAILED DESCRIPTION OF EMBODIMENTS OF THE INVENTION

In the following description, numerous specific details are set forth in order to provide a thorough understanding of the present invention. It will be understood by one skilled in the art however, that the present invention may be practiced without some or all of these specific details. In other instances, well known elements have not been described in detail in order not to unnecessarily obscure the description of the present invention.

Figure 5 is a schematic representation of a region of a wind turbine, said region comprising a plurality of auxiliary asynchronous generators and a plurality of pitch systems according to an embodiment of the invention. The plurality of pitch systems may comprise a pitch system for each blade of the wind turbine. Figure 5 also schematically indicates a frame 541, a hub 542 and a shaft 503. The hub 542 and the shaft 503 may be operationally connected in such a way that the shaft can transmit rotational movement of the hub 542 to other parts of the wind turbine (e.g. to a gearbox and a main generator). Said hub 542, frame 541 and shaft 503 may be configured substantially in accordance with Figure 1a, which will be described in more detail later.

The configuration of each auxiliary generator 500-502 may largely correspond to the configurations described in more detail later on with reference to any of Figures 1 to 4. A first generator 500 may comprise a first ring 500b of power-producing windings mounted to the hub 542 and a second ring 500a of magnetic field windings mounted to the frame 541, said first ring 500b arranged radially outside said second ring 500a. Equivalently, a second generator 501 may comprise a first ring 501 b of power-producing windings and a second ring 501 a of magnetic field windings, said first ring 501 b arranged radially outside said second ring 501 a. And equally, a third generator 502 may comprise a first ring 502b of power-producing windings and a second ring 502a of magnetic field windings, said first ring 502b arranged radially outside said second ring 502a.

A first pitch system may comprise a pitch motor 504 electrically connected with the power-producing windings 500b of the first generator 500, a second pitch system may comprise a pitch motor 505 electrically connected with the power-producing windings 501 b of the second generator 501, and a third pitch system may comprise a pitch motor 506 electrically connected with the power-producing windings 502b of the third generator 502.

Each of the pitch systems may comprise a related power electronic converter 507-509 connected with a main power line 513, such that said power electronic converters 507-509 can adjust the power supplied from said main power line 513 to control the magnetic field windings of the corresponding auxiliary generators.

The motor 504 of the first pitch system may be operationally connected to at least one actuator for changing the pitch angle of its related blade. Thus, for example, the movement produced by the motor 504 may be transmitted through suitable transmission means comprising, for example, a reduction gearing 514 and a pinion 517 to an annular gear 520 provided at a root 529 of the blade. The motor 505 of the second pitch system may be operationally connected to an actuator comprising a reduction gearing 515, a pinion 518, an annular gear 521 provided at a root 530 of the blade configured in the same way as explained in relation to the motor 504 of the first pitch system. And the motor 506 of the third pitch system may be operationally connected to an actuator comprising a reduction gearing 516, a pinion 519, an annular gear 522 provided at a root 531 of the blade configured in the same way as explained in relation to the motor 504 of the first pitch system.

Each pitch system may comprise a control unit (not shown), such as for example a PLC (Programmable Logic Controller), being programmed for producing the necessary signals for an optimal operation of the system. This control unit may control e.g. each of the provided power electronic converters 507-509 to conveniently adjust power from the main power line 513, such that the speed of the pitch motors 504-506 can be varied for each related blade to assume a correct position in accordance with e.g. wind conditions. Optionally, each control unit may be integrated within its related power electronic converter 507-509.

The converter 507 of the first pitch system may comprise the necessary elements for converting AC power from the main power line 513 into DC power, and for finally converting said DC power into variable AC power. But this configuration may be varied in accordance with the characteristics of the corresponding pitch motor 504 and/or the power line 513. For example, said converter 507 may comprise a rectifier 507a, a DC link 507b, and an inverter 507c. In case of the power line 513 being a DC power line, only conversion of DC power into variable AC power will be required (DC link 507b, and inverter 507c). As these kinds of converters are generally well known in the technical field, no further detailed descriptions will be provided. In the particular examples illustrated here, the pitch motors are assumed to be AC motors. The invention however is not limited to this particular choice as suitable DC motors may also be used. The other two converters 508,509 may function in a similar way.

Moreover, some switching systems 510-512 for the converters 507-509 may be provided in each connection between the main power line 513 and a converter. These switching systems may be based on means for interrupting or attenuating the electrical current/voltage, as for example on-off switches, push switches, and so on. These switching systems may be of particular relevance in situations of e.g. electrical surge, in which case the components of the system may be damaged. The control unit may activate/deactivate the switching systems by sending corresponding on-off signals. As these kinds of elements are generally well known in the technical field, no further detailed description will be provided in this context.

Switching systems have been shown in particular positions of the circuit shown in Figure 5, but it will be understood that said or similar switching systems may be provided in other positions in accordance with specific needs of a particular design in order to protect any of the elements connected by said connections from e.g. electrical surges.

Each pitch system may comprise a power storage system 538-540, such as e.g. a battery or an ultra-capacitor (also known as super-capacitor), electrically connected with the main power line 513 and with its related power electronic converter 507-509. Thus, each of said power storage systems can store power from the main power line 513 and supply stored power to its related power electronic converter when e.g. power supply from the main power line 513 fails.

Such power storage systems may e.g. consist of batteries or ultra-capacitors, and have the function of providing DC power to the converters 507-509. Each connection between a power storage system and its related converter 507-509 may comprise protective elements 526-528, e.g. fuses and diodes, aimed at avoiding damage in the batteries or ultra-capacitors as consequence of retro-voltages from the converters 507-509.

Protective elements have been shown in particular positions in the circuits of Figure 5, but it has to be understood that other connections may comprise the same or similar protective elements in order to protect any of the elements connected by said connections from e.g. retro-voltages.

Such power storage systems may have the function of providing DC power to the converters when it is needed, i.e. when power from the main power line is required but the main power line fails. Under normal circumstances, the power storage is charged by the main power line. In alternative embodiments, the power storage may be stand-alone, and a connection with a main power line would not be needed.

The pitch motor 504 of the first pitch system may comprise a feedback 532 for providing signals about its performance to its related power electronic converter 507, such that the power electronic converter 507 can control operation of its related magnetic field windings 500a taking into account said performance signals from its related pitch motor 504, and similarly for pitch motors 505 and 506. Said performance signals may refer to e.g. angular position, speed, etc. of the corresponding pitch motor 504-506.

In some embodiments, the wind turbine may further comprise wireless means for each pitch motor 504-506 providing performance signals to its related power electronic converter 507-509.

Alternatively to said wireless means, the wind turbine may further comprise a slip ring 535 mounted on the shaft 503, each performance feedback 532-534 may be electrically connected with the slip ring 535, and each power electronic converter may be electrically connected with the slip ring 535, such that each pitch motor can provide performance signals to its related power electronic converter through said slip ring.

In the embodiments comprising the slip ring 535, the wind turbine may comprise a first multiplexer 537 and a second multiplexer 536, both connected with the slip ring 535. The first multiplexer 537 may also be connected with the performance feedbacks 532-534, and the second multiplexer 536 may also be connected with the converters 507-509. A control unit may send appropriate signals to the multiplexers 537,536 for coordinating selection of signals by the first multiplexer 537 and provision of signals by the second multiplexer 536. Said coordination causing that performance signals from a particular performance feedback 532-534 is received by the converter 507-509 related to the motor that has generated said performance signals. For example, if the first multiplexer 537 selects signals from the feedback 533 of the second motor 505, the second multiplexer 536 should select, substantially at the same time, the converter 508 as the receiver of said signals from the feedback 533.

When the hub 542 does not rotate, the auxiliary asynchronous generators 500-502 may act as transformers, so that power with origin in the power line 513 or batteries (or ultra-capacitors) 538-540 may be transmitted to the pitch motors 504-506 through the auxiliary asynchronous generators 500-502. The converters 507-509 may adjust power from the power line 513 or batteries (or ultra-capacitors) 538-540 to cause provision of proper power to the motors 504-506 for moving the blades to a position for initiating rotation of the hub 542. The converters 507-509 may carry out said adjustment of power taking into account different parameters. One of these parameters may be that the generators 500-502 act as transformers when the hub 542 is not rotating.

When the hub 542 is rotating, said rotation movement may change the conditions in which the generators 500-502 are producing power. Said changing conditions may be detected from changes in the performance of the motors 504-506 and compensated by the converters 507-509 by properly adjusting power from the main power line 513 or batteries (or ultra-capacitors) 526-528. The reception of performance signals by the converters 507-509 from the motors 504-506, as previously described in reference to performance feedbacks 532-534 and other elements, permits the converters 507-509 taking into account changes in the performance of the motors 504-506 for adjusting power and, thus, compensating changing conditions in the generators 500-502.

Alternatively or in addition to the performance feedbacks 532-534 and related elements that permit the converters 507-509 to take into account changes in the performance of the motors 504-506, the wind turbine may comprise one or more sensors for obtaining rotational measurements (e.g. rotational speed) of the hub 542. Said sensor may be connected to the slip ring 535 in such a way that said rotational measurements can be transmitted to the converters 507-509. This way, converters 507-509 can take into account variations in the rotation of the hub 542 to properly adjust power from the main power line 513 or batteries (or ultra-capacitors) 526-528 and, thus, to compensate changing conditions in the generators 500-502 due to changing rotation of the hub 542.

Embodiments permitting the converters 507-509 to receive both performance signals from the motors 504-506 and rotational measurements of the hub 542 from the rotational sensor may offer higher accuracy. The two different types of signals from the two different elements of the wind turbine may be combined, such as e.g. by obtaining average values from both and/or discarding signals exceeding a predetermined range of normality. Such a combination will normally produce more accurate values to be taken into account by the converters 507-509.

Figure 5 also reflects that the number of elements arranged in the hub 542 may be reduced in comparison with other known configurations. In particular, it is shown that elements such as e.g. converters 507-509, switching systems 510-512, protective elements 526-528, batteries (or ultra-capacitors) 538-540, etc. may be arranged in the frame 541 (or in a nacelle of the wind turbine). Therefore, the weight of the hub 542 may be reduced and said elements (converters, switching systems, etc.) may be better protected when arranged in the frame 541. Consequently, the performance and failure resistance of the wind turbine may be improved.

Figure 1 schematically represents a wind turbine and a region of said wind turbine comprising an auxiliary asynchronous generator according to embodiments of the invention. In particular, Figure 1 a refers to a cross section of said wind turbine and Figure 1b refers to a cross section of said region of said wind turbine.

The wind turbine of Figure 1 a comprises a tower 113 with a forward extending frame 104, and a nacelle 100 arranged on top of the tower. The wind turbine further comprises a main generator 101, and a hub 105 carrying one or more blades 103. A shaft 102 may be provided for transmitting torque from the hub 105 to the main generator 101 when the hub 105 is set into rotation by the wind. The hub 105 may be rotatably mounted on the frame 104 through a plurality of bearings 106 in such a way that the frame 104 is provided at least partially internally of the hub 105.

The configuration of Figure 1a has the advantage of providing a very high stability between the hub 105 and the frame 104, even when the hub rotates at a high speed. The hub 105 and the frame 104 may be joined through the bearings 106 in such a way that the hub 105 and frame 104 behave substantially as a single body under the cyclical bending loads that may be caused by e.g. the loads on the blades 103 and the weight of the hub 105 and blades 103.

The Figure 1b shows an enlarged view of a region 107 of Figure 1a , said region 107 additionally showing (with respect to Figure 1a) a plurality of power-producing windings 108 mounted to the hub 105 and a plurality of magnetic field windings 109 mounted to the frame 104. The power producing windings 108 and magnetic field windings 109 make up an auxiliary asynchronous generator.

In the embodiment of Figure 1b , the magnetic field windings 109 are mounted to the frame 104 in a zone substantially halfway between a distal end and a proximal end of the frame 104 with respect to the tower 113. The power-producing windings 108 are mounted to the hub 105 in such a way that the constituted auxiliary asynchronous generator is a substantially ring-shaped generator. Said ring-shaped generator comprising a first ring 110 of power-producing windings 108 and a second ring 111 of magnetic field windings 109, said first ring 110 arranged radially outside said second ring 111.

An aspect of the configuration of Figure 1b is that power from power-producing windings 108 can be supplied to auxiliary power consuming systems (e.g. pitch systems) arranged in the hub 105 without requiring means for transmitting said power through the shaft 102, since both the power-producing windings 108 and the pitch systems are arranged in the hub 105.

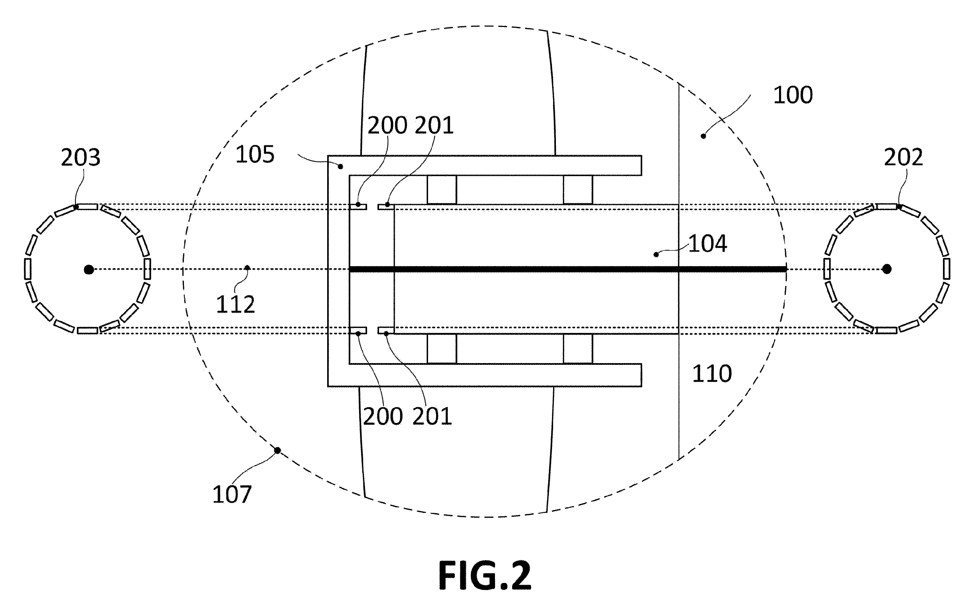

Figure 2 is a schematic representation of a region 107 of the wind turbine shown in Figure 1, said region 107 comprising a plurality of magnetic field windings 201 mounted in a distal end region of the frame 104 with respect to the tower 113. The region 107 also comprises a plurality of power-producing windings 200 mounted to the hub 105 in such a way that an auxiliary asynchronous generator is constituted. This generator is a substantially ring-shaped generator comprising a first ring 203 of power-producing windings 200 and a second ring 202 of magnetic field windings 201, said first and second rings axially facing each other with respect to the axis 112 of rotation of the hub 105.

Figure 3 is a schematic representation of a region of a wind turbine, said region comprising an auxiliary generator according to a still other embodiment of the invention. This region relates to a configuration similar to the region 107 of Figure 1, in which a hub 301 is rotatably mounted on a frame 300 through a plurality of bearings 302, in such a way that the frame 300 is provided at least partially internally of the hub 301.

The structure of Figure 3 comprises a plurality of magnetic field windings 304 mounted in a distal end region of the frame 300. This structure also comprises a plurality of power-producing windings 303 mounted to the hub 301. Said magnetic field windings 304 and power-producing windings 303 are mounted in such a way that they constitute an auxiliary asynchronous generator. This generator is a substantially ring-shaped generator comprising a first ring 306 of power-producing windings 303 and a second ring 307 of magnetic field windings 304, said first ring 306 arranged radially outside said second ring 307.

The configuration of Figure 3 may be comprised in a structure satisfying the principles described in relation to Figure 1a, such that the power producing windings and the magnetic field windings constitute an air gap uniform and stable in any operational circumstances.

Figure 4 is a schematic representation of a region of a wind turbine similar to the region of Figure 3, with the only difference that said region comprises more than one auxiliary generator, in accordance with a further embodiment of the invention. The structure of Figure 4 comprises a plurality of magnetic field windings 304 mounted in a distal end region of the frame 300. This structure also comprises a plurality of power-producing windings 303 mounted to the hub 301. Said magnetic field windings 304 and power-producing windings 303 are arranged in such a way that three auxiliary asynchronous generators 400,401,402 are constituted. Each of said three generators 400,401,402 is a substantially ring-shaped generator comprising a first ring 306 of power-producing windings 303 and a second ring 307 of magnetic field windings 304, said first ring 306 arranged radially outside said second ring 307.

The configuration of Figure 4 may be comprised in a structure satisfying the principles described in relation to Figure 1a, such that each constituted auxiliary asynchronous generator comprises an air gap uniform and stable in any operational circumstances.

An aspect of the embodiments of Figures 2 to 4, in which the magnetic field windings are mounted in a distal end region of the frame with respect to the tower, is that they permit maintenance personnel to have a better access to the one or more constituted auxiliary asynchronous generators when said personnel require access for e.g. reparation or maintenance tasks.

Some embodiments of the wind turbine may be suitable to stop rotation of the hub in emergency situations, when e.g. a main power line fails and, consequently, interruption of the operation of the wind turbine may be required. In particular, this operation may be implemented in those embodiments comprising a pitch system for each blade of the wind turbine, and a power storage system for each of the pitch systems. If a main power line fails when the wind turbine is in operation, the rotation of the hub may be used to generate electricity in the auxiliary generator which may be supplied to a pitch system. In such a configuration, each pitch system and its related power electronic converter may be configured to perform a method, which may comprise use of power from its related power storage system to control the magnetic field windings in such a way that electricity may be supplied to a pitch system such as move its related blade to a vane position (and stop rotation of the hub).

Although this invention has been disclosed in the context of certain preferred embodiments and examples, it will be understood by those skilled in the art that the present invention extends beyond the specifically disclosed embodiments to other alternative embodiments and/or uses of the invention and obvious modifications and equivalents thereof. Thus, it is intended that the scope of the present invention herein disclosed should not be limited by the particular disclosed embodiments described before, but should be determined only by a fair reading of the claims that follow.

## Claims

1. Wind turbine comprising:
a main generator;
a tower with a frame;
a hub carrying one or more blades and being rotatably mounted on the frame;
a plurality of power-producing windings mounted to the hub and a plurality of magnetic field windings mounted to the frame, in such a way that said power-producing windings and said magnetic field windings make up at least one auxiliary asynchronous generator;
a power source; and
a power electronic converter for each auxiliary asynchronous generator; wherein:
each power electronic converter is electrically connected with the power source and with the magnetic field windings of its related auxiliary asynchronous generator, such that each power electronic converter can control operation of its related magnetic field windings.

2. Wind turbine according to claim 1, wherein:
the frame extends forwardly away with respect to the tower; and
the hub is rotatably mounted on the frame in such a way that the frame is provided at least partially internally of the hub.

3. Wind turbine according to claim 2, wherein the magnetic field windings are mounted in a distal end region of the frame with respect to the tower.

4. Wind turbine according to any of claims 2 or 3, wherein the power-producing windings are mounted to the hub and the magnetic field windings are mounted to the frame in such a way that each resulting auxiliary asynchronous generator is a substantially ring-shaped generator comprising a first ring of power-producing windings and a second ring of magnetic field windings, said first ring arranged radially outside said second ring.

5. Wind turbine according to any of claims 1 to 3, wherein the power-producing windings are mounted to the hub and the magnetic field windings are mounted to the frame in such a way that each resulting auxiliary asynchronous generator is a substantially ring-shaped generator comprising a first ring of power-producing windings and a second ring of magnetic field windings, said first and second rings axially facing each other with respect to the axis of rotation of the hub.

6. Wind turbine according to any of claims 1 to 5, wherein the power source comprises an electrical connection with a main power line.

7. Wind turbine according to claim 6, further comprising a power storage system for each auxiliary asynchronous generator; wherein each power storage system is electrically connected with the main power line; and wherein the power source further comprises, for each power electronic converter, an electrical connection with its related power storage system.

8. Wind turbine according to any of claims 1 to 7, comprising a plurality of blades, each of the blades having a pitch motor operationally connected to at least one actuator for changing the pitch angle of its related blade; wherein the plurality of power-producing windings and the plurality of magnetic field windings make up an auxiliary asynchronous generator for each of the pitch motors; and wherein the power-producing windings of each of said auxiliary asynchronous generators are electrically connected with its related pitch motor.

9. Wind turbine according to claim 8, wherein the plurality of power-producing windings and the plurality of magnetic field windings make up at least one further auxiliary asynchronous generator for supplying power to at least one other auxiliary system.

10. Wind turbine according to any of claims 8 or 9, wherein each pitch motor comprises a feedback for providing signals about its performance to its related power electronic converter, such that each power electronic converter can control operation of its related magnetic field windings taking into account said performance signals from its related pitch motor.

11. Wind turbine according to claim 10, further comprising wireless means for each pitch motor providing performance signals to its related power electronic converter.

12. Wind turbine according to claim 10, further comprising a shaft operationally connected with the hub, such that rotational movement of the hub can be transmitted through the shaft, and a slip ring mounted on the shaft; wherein the performance feedback of each pitch motor is electrically connected with the slip ring, and each power electronic converter is electrically connected with the slip ring, such that each pitch motor can provide performance signals to its related power electronic converter through said slip ring.

13. Wind turbine according to any of claims 1 to 12, wherein each power-producing winding is a polyphase winding.

14. Wind turbine according to any of claims 1 to 13, wherein each magnetic field winding is a polyphase winding.
